# EUROPÄISCHE PATENTSCHRIFT

(11) **EP 0 842 556 B1**
(45) Veröffentlichungstag und Bekanntmachung des Hinweises auf die Patenterteilung: **03.02.1999**
(21) Anmeldenummer: 96932430.0
(22) Anmeldetag: 24.07.1996
(51) Int. Cl.: H02B 11/127

(54) **SCHALTGERÄT MIT STEUERBARER VERFAHRBARKEIT EINES EINSCHUB-LEISTUNGSSCHALTERS**
SWITCHING DEVICE WITH CONTROLLABLE MOVABILITY OF A PLUG-IN CIRCUIT-BREAKER
APPAREIL DE COMMUTATION A MOBILITE CONTROLABLE D'UN DISJONCTEUR ENFICHABLE

(30) Priorität: 31.07.1995 DE 19529051; 08.08.1995 DE 19530682
(43) Veröffentlichungstag der Anmeldung: 20.05.1998
(73) Patentinhaber: SIEMENS AKTIENGESELLSCHAFT, 80333 München (DE)
(72) Erfinder: LIEBETRUTH, Marc, D-13465 Berlin (DE)
(86) Internationale Anmeldenummer: DE9601440
(87) Internationale Veröffentlichungsnummer: WO9705680

(56) Entgegenhaltungen:
- EP-A- 0 227 587
- DE-A- 3 545 780
- DE-A- 3 908 056
- US-A- 2 777 024
- US-A- 2 921 998
- US-A- 4 004 113
- US-A- 4 209 676
- PATENT ABSTRACTS OF JAPAN vol. 18, no. 332 (E-1567) & JP 06 078421 A (MITSUBISHI), 18.März 1994,

## Beschreibung

Die Erfindung betrifft ein Schaltgerät mit einer Einrichtung zum steuerbaren Verfahren eines in einer Schaltanlage relativ zu einem Einschubrahmen mittels einer in dem Einschubrahmen drehbar gelagerten, durch eine aufsteckbare Betätigungskurbel bedienbaren Betätigungswelle bewegbaren Einschub-Leistungsschalters in eine Betriebsstellung, eine Teststellung und eine Trennstellung, wobei ein steuerbares Verschlußorgan den Zugang der Betätigungskurbel zu der Betätigungswelle freigibt oder sperrt und der Einschub-Leistungsschalter aus dem Einschubrahmen nach dem Öffnen einer Tür entnehmbar ist.

Eine Einrichtung dieser Art ist beispielsweise aus der DE 35 45 780 Al bekannt. Ein in Abhängigkeit der Stellung der Schaltanlagentür blockierbarer bzw. freigebbarer Anschlagkörper verhindert generell bei geöffneter Schaltanlagentür die Möglichkeit des Eingriffs eines Werkzeuges zum Verfahren des Einschub-Leistungsschalters im Einschubrahmen. Der Anschlagkörper selbst ist mit einer Führungsstange fest verbunden, die in allen Stellungen - Betriebsstellung, Teststellung und Trennstellung - durch einen Riegel blockierbar ist, wobei der Riegel über ein biegsames Übertragungsorgan direkt durch die geöffnete Stellung der Schaltgerätetür betätigbar ist. Diese Maßnahme dient ausschließlich dem Personenschutz.
Die der Erfindung zugrunde liegende Aufgabe besteht darin, die Sicherungsvorkehrungen für Einschub-Leistungsschalter auf den Anlagenschutz hin zu erweitern, wobei jedoch die vorhandenen konstruktiven Lösungen weitgehendst unverändert beizubehalten bzw. zusätzliche Sicherungsmaßnahmen mit möglichst geringem apparativen Aufwand zu realisieren sind. Erfindungsgemäß wird dies dadurch erreicht, daß das Verschlußorgan durch eine in dem Einschubrahmen angeordnete und mit dem Einschub-Leistungsschalter zusammenwirkende Verriegelungseinrichtung sowie durch einen in der Tür der Schaltanlage befindlichen Schließzzylinder derart steuerbar ist, daß ein Verfahren des Einschub-Leistungschalters in einer Vorzugsstellung, insbesondere in der Trennstellung, verhindert, die Entnahme aus dem Einschubrahmen jedoch ermöglicht ist.

Mit der erfindungsgemäßen Verriegelungseinrichtung könnnen in einfacher Weise eine Vielzahl anlagenrelevanter Schutzmaßnahmen realisiert werden, die durch Einbeziehung der Erkennung und Auswertung von Vorzugsstellungen des Einschub-Leistungsschalteres innerhalb des Einschubrahmens des Schaltgerätes in einfacher Weise an unterschiedlichste Sicherungsbedingungen für den Anlagenschutz anpaßbar sind. Wesentlich ist hierbei, daß die betreffenden Sicherungsbedingungen durch ortsfeste Baugruppen bestimmt sind und den Einschub-Leistungsschalter beim Einsetzen in den Einschubrahmen übertragen werden. Daher werden die gleichen Sicherungsbedingungen wirksam, wenn der Einschub-Leistungsschalter gegen einen anderen Einschub-Leistungsschalter ausgetauscht wird.

Schaltanlagen mit Einschub-Leistungsschaltern sind unter anderem in der US 2,777,024, der US 2,921,998 und der US 4,044,113 beschrieben. In der US 2,777,024 sind nur die Standard-Bedingungen berücksichtigt, daß ein Verfahren des eingeschalteten Leistungsschalters und das Einschalten beim Verfahren verhindert werden sollen. Eine Abschließeinrichtung ist nicht erwähnt.

Bei der Einrichtung nach der US 2,921,998 befindet sich die Abschließeinrichtung am Leistungsschalter, der in der vorliegenden Anmeldung behandelte Fall des gefahrlosen Austausches eines Leistungsschalters ist nicht berücksichtigt.

Nach der US 4,044,113 wirkt das Verschlußorgan für den Zugang zu der Betätigungswelle des Fahrantriebes mit den Fahrschienen zusammen und sperrt den Einschub-Leistungsschalter in der Test- oder der Trennstellung. Damit ist zugleich ein Austausch des Leistungsschalters ausgeschlossen.

Gemäß einer vorteilhaften Ausgestaltung der Erfindung ist vorgesehen, daß die Verriegelungseinrichtung ein auf einer Tragplatte drehgelagertes Positionsabfrageblech enthält, das über ein Kopplungsgestänge mit einer ebenfalls auf der Tragplatte drehgelagerten Nockenscheibe verbunden ist, und daß das Positionsabfrageblech derart mit einem die Drehstellung des Schließzylinders übertragenden Seilzug in Verbindung steht, das ausschließlich in der Vorzugsstellung des Einschub-Leistungsschalters in Verbindung mit einer nur in dieser Vorzugsstellung erreichbaren Schlüsselfreigabeposition des Schließzylinders im Zusammenwirken in einem mittels einer Arretierungsfeder lagefixierten Verriegelungsblech das Verschlußorgan weiterhin gesperrt ist.

Mit dem Positionsabfrageblech zur Lageerfassung des Einschub-Leistungsschalteres in Verbindung mit dem die Drehstellung des Schließzylinders der Schaltgerätetür markierenden Seil zuges läßt sich in einfacher Weise eine Schlüsselfreigabe steuern, die nur in der Vorzugsstellung, also in diesem Fall in der Trennstellung des Einschub-Leistungsschalters, möglich ist. Für alle anderen Vorzugsstellungen - in der Betriebsstellung und in der Teststellung - kann in diesem Fall der Schlüssel nicht aus dem Schließzylinder der Schaltgerätetür entfernt werden, da das Verriegelungsblech das Verschlußorgan im gesperrten Zustand behält.

Gemäß einer weiteren vorteilhaften Ausgestaltung der Erfindung ist vorgesehen, daß das Tragblech als Bestandteil des Einschubrahmens unterhalb des Einschub-Leistungsschalters angeordnet ist. Damit ist eine sehr einfache und kompakte Verriegelungseinrichtung geschaffen, die ausschließlich auf die bereits vorhandenen mechanischen Konstruktionselemente zur Verfahrsperrung des Einschub-Leistungsschalters innerhalb des Einschubrahmens des Schaltgerätes einwirkt.

Eine weitere vorteilhafte Ausgestaltung der Erfindung ist darin zu sehen, daß die Verriegelungseinrichtung ein einstükkiges, das Positionsabfrageblech und die Nockenscheibe funktionsintegrierendes Steuergerät enthält, so daß in diesem Fall das Kopplungsgestänge entfallen kann. Voraussetzung dafür ist allerdings, daß die Ausführung des Verriegelungsbleches im unteren Bereich der Kontur des verfahrbaren Einschub-Leistungsschalters geändert wird und somit nicht mehr auf Freiräume im Bereich des Einschub-Leistungsschalters angewiesen ist.

Die Erfindung wird durch ein figürlich dargestelltes Ausführungsbeispiel in drei Figuren näher erläutert, wobei die
- Figur 1: eine Prinzipdarstellung einer Schaltanlage mit einem Niederspannungs-Leistungsschalter zeigt und die
- Figuren 2 und 3: zwei wesentliche Betriebszustände der Verriegelungseinrichtung im Zusammenwirken mit der Lage des Einschub-Leistungsschalters innerhalb des Einschubrahmens erkennen lassen.

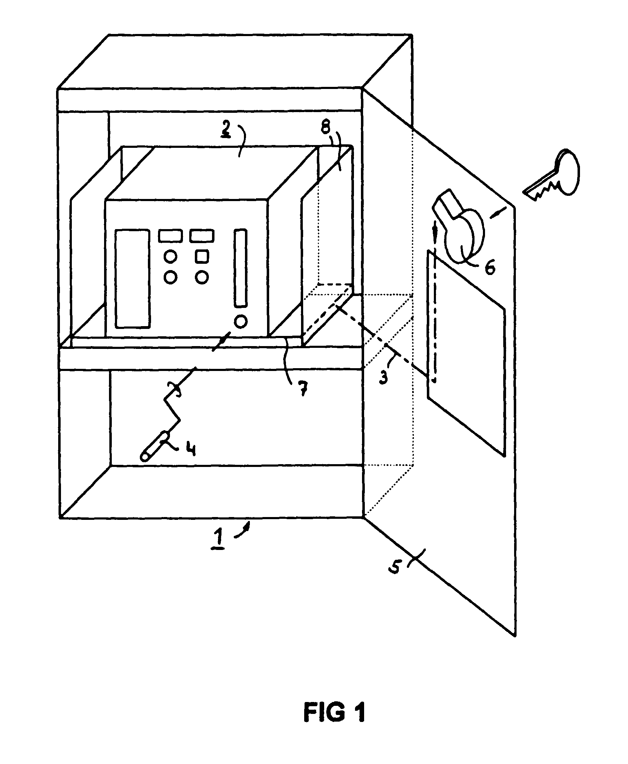

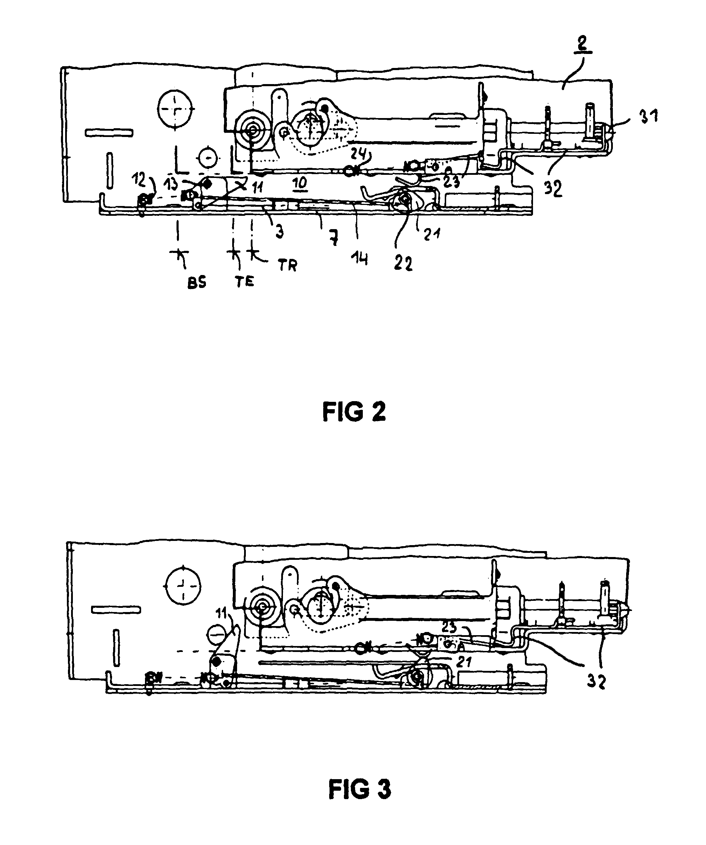

Die Figur 1 zeigt eine Schaltanlage 1 in einer Prinzipdarstellung, wobei der Einschub-Leistungsschalter 2 innerhalb des Einschubrahmens 8 verfahrbar ist. Die Verfahrbarkeit des Einschub-Leistungsschalters 2 wird durch die Betätigungskurbel 4 und eine Betätigungswelle 31 (Figuren 2 und 3)bewirkt, wobei die Verfahrbarkeit des Einschub-Leistungsschalters zwischen der Betriebsstellung über die Teststellung bis hin zur Trennstellung erfolgen kann. Des weiteren ist die Tragplatte 7 angedeutet, auf der sich die hier nicht dargestellte Verriegelungseinrichtung befindet, auf die mit dem Seilzug 3 die Stellung des Schließzylinders 6 einwirkt. Der Schließzylinder 6 ist von außen her zugänglich und befindet sich in der Schaltgerätetür 5.

Die Figuren 2 und 3 zeigen die Verriegelungseinrichtung 10 in zwei unterschiedlichen Betriebszuständen, wobei die Figur 2 die Verfahrbarkeit des Einschub-Leistungsschalters im ungesperrten Zustand zeigt, während die Figur 3 die Verfahrbarkeit des Einschub-Leistungsschalters im gesperrten Zustand erkennen läßt.

In der Figur 2 ist angedeutet, daß der Einschub-Leistungsschalter 2 in unterschiedlichen Vorzugsstellungen, der Betriebsstellung BS, der Teststellung TE und der Trennstellung TR angeordnet sein kann. Zur Abfrage der jeweiligen Vorzugsstellung ist innerhalb der Verriegelungseinrichtung 10 das Positonsabfrageblech 11 vorgesehen, welches in dem Drehlager 13 direkt auf einen abgewinkelten Teil der Tragplatte 7 drehbar gelagert ist. Das Positionsabfrageblech 11 ist mittels einer Führungsfeder 12 in einer bevorzugten Lage gehalten Weiterhin ist erkennbar, daß an dem Positionsabfrageblech 11 der Seilzug 3 angreift, dessen nicht dargestelltes Ende mit der Kontur des Schließzylinders 6 (Figur 1) verbunden ist. Außerdem weist die Verriegelungseinrichtung 10 die Nockenscheibe 21 auf, die mit dem Kopplungsgestänge 14 ebenfalls mit dem Positionsabfrageblech 11 verbunden ist. Die Nockenscheibe 21 der Verriegelungseinrichtung 10 ist ebenfalls über ein Drehlager 22 im Bereich einer nicht bezeichneten Abwinklung der Tragplatte 7 drehbar gelagert Oberhalb der Nokkenscheibe 21 befindet sich am verfahrbaren Einschub-Leistungsschalter 2 das Verriegelungsblech 23, das durch Einwirkung der Nockenscheibe 21 so geschwenkt werden kann, daß das Verschlußorgan 32 den Zugang zur Betätigungswelle 31 sperrt oder freigeben kann. Außerdem wirkt an dem Verriegelungsblech 23 die Arretierungsfeder 24, die das Verriegelungsblech 23 im unbeeinflußten Zustand durch die Nockenscheibe 21 in eine Vorzugsstellung bringt. Das Verschlußorgan 32 läßt sich im ungesperrten Zustand axial verschieben, so daß im ungesperrten Zustand auf die Betätigungswelle 31 in nicht dargestellter Weise eine Betätiungskurbel aufschieben läßt, die somit in Verbindung mit dem nicht bezeichneten Sechskantbereich der Betätigungswelle 31 kraftschlüssig mit derselben verbunden ist.

Die Figur 3 zeigt den Sperrzustand der Verriegelungseinrichtung 10, der dadurch erreicht ist, daß der Einschub-Leistungsschalter in der Trennstellung so verfahren ist, daß mit dem Betätigen des in Figur 1 dargestellten Schlüssels die Bewegung des Schloßzylinders die Betätigung des Positionsabfragebleches 11 ermöglicht, und somit die über das Kupplungsgestänge verbundene Nockenscheibe 21 das Verriegelungsblech 23 derart verschwenkt, daß das Verschlußorgan 32 in seiner axialen Bewegung blockiert ist. Damit ist sichergestellt, daß der Schlüssel nur in der Trennstellung des Einschub-Leistungsschalters abziehbar ist, während sowohl in der Betriebsstellung als auch in der Teststellung der Schlüssel nicht aus dem Schließzylinder 6 (Figur 1) entfernt werden kann. In diesem Zustand kann auch die Betätigungskurbel 4 (Figur 1) nicht auf die Betätigungswelle 31 (Figur 2) aufgesetzt werden, so daß damit die Verfahrbarkeit des Einschub-Leistungsschalters 2 (Figur 2) in der Trennstellung gesperrt ist. Ungeachtet dieser Sperrmaßnahme läßt sich jedoch der Einschub-Leistungsschalter 2 (Figur 2) über seine Trennstellung TR (Figur 2) hinaus aus dem Einschubrahmen herausziehen. Das Verriegelungsblech 23 gleitet damit zwar über das Gefälle der Nockenscheibe 21 wieder in den Freigabezustand, allerdings wird mit dem erneuten Einsetzen des Einschub-Leistungsschalters in den Einschubrahmen das Verriegelungsblech 23 automatisch wieder durch die unveränderte Position der Nockenscheibe 21 in den Sperrzustand versetzt.

## Patentansprüche

1. Schaltgerät (1) mit einer Einrichtung zum steuerbaren Verfahren eines in einer Schaltanlage (1) relativ zu einem Einschubrahmen (8) mittels einer in dem Einschubrahmen (8) drehbar gelagerten, durch eine aufsteckbare Betätigungskurbel (4) bedienbaren Betätigungswelle (31) bewegbaren Einschub-Leistungsschalters (2) in eine Betriebsstellung (BS), eine Teststellung (TE) und eine Trennstellung (TR), wobei ein steuerbares Verschlußorgan (32) den Zugang der Betätigungskurbel (4) zu der Betätigungswelle (31) freigibt oder sperrt und der Einschub-Leistungsschalter (2) aus dem Einschubrahmen nach dem Öffnen einer Tür (5) entnehmbar ist,
**dadurch gekennzeichnet,**
daß das Verschlußorgan durch eine in dem Einschubrahmen (8) angeordnete und mit dem Einschub-Leistungsschalter (2) zusammenwirkende Verriegelungseinrichtung (10) sowie durch einen in der Tür (5) der Schaltanlage (1) befindlichen Schließzzylinder (6) derart steuerbar ist, daß ein Verfahren des Einschub-Leistungschalters (2) in einer Vorzugsstellung, insbesondere in der Trennstellung, verhindert, die Entnahme aus dem Einschubrahmen (8) jedoch ermöglicht ist.

2. Schaltgerät nach Anspruch 1,
**dadurch gekennzeichnet,** daß die Verriegelungseinrichtung (10) ein auf einer Tragplatte (7) drehgelagertes Positionsabfrageblech (11) enthält, das über ein Kopplungsgestänge (14) mit einer ebefalls auf der Tragplatte (7) drehgelagerten Nockenscheibe (21) verbunden ist, und daß das Positionsabfrageblech (11) derart mit einem die Drehstellung des Schließzylinders (6) übertragenden Seilzug (3) in Verbindung steht, daß ausschließlich in der Vorzugsstellung des Einschub-Leistungsschalters (2) in Verbindung mit einer nur in dieser Vorzugstellung erreichbaren Schlüsselfreigabeposition des Schließzylinders (6) im Zusammenwirken mit einem mittels Arretierungsfeder (24) lagefixierten Verriegelungsblech (23) das Verschlußorgan (32) weiterhin gesperrt ist.

3. Schaltgerät nach Anspruch 2,
**dadurch gekennzeichnet,** daß das Tragblech (7) als Bestandteil des Einschubrahmens (8) unterhalb des Einschub-Leistungschalters (2) angeordnet ist.

4. Schaltgerät nach Anspruch 2,
**dadurch gekennzeichnet,** daß die Verriegelungseinrichtung (10) ein einstückiges das Positionsabfrageblech (11) und die Nockenscheibe (21) funktionsintegrierendes Steuerteil enthält.

## Claims

1. Switching device (1) with a device for the controllable movement of a plug-in circuit breaker (2) into an operating position (BS), a testing position (TE) and a disconnected position (TR), which plug-in circuit breaker is movable in a switchgear (1) relative to a plug-in frame (8) by means of an actuating shaft (31) which is rotatably mounted in the plug-in frame (8) and which can be operated by an attachable actuating crank (4), with a controllable closing part (32) enabling or blocking the access of the actuating crank (4) to the actuating shaft (31) and with the plug-in circuit breaker (2) being removable from the plug-in frame after the opening of a door (5),
characterized in that the closing part can be controlled by an interlocking device (10), arranged in the plug-in frame (8) and cooperating with the plug-in circuit breaker (2), and by a closing cylinder (6), located in the door (5) of the switchgear (1), in such a way that a movement of the plug-in circuit breaker (2) in a preferred position, in particular in the disconnected position, is prevented, although the removal from the plug-in frame (8) is made possible.

2. Switching device according to claim 1,
characterized in that the interlocking device (10) contains a position inquiry plate (11) which is rotatably mounted on a support plate (7) and is connected by way of a coupling rod (14) to a cam disc (21) which is likewise rotatably mounted on the support plate (7), and in that the position inquiry plate (11) is connected to a cable pull (3), which transmits the rotary position of the closing cylinder (6), in such a way that exclusively in the preferred position of the plug-in circuit breaker (2), in connection with a key release position of the closing cylinder (6), which position can only be reached in this preferred position, in cooperation with an interlocking plate (23), the position of which is fixed by means of a stopping spring (24), the closing part (32) continues to be locked.

3. Switching device according to claim 2,
characterized in that the support plate (7) as a component part of the plug-in frame (8) is arranged below the plug-in circuit breaker (2).

4. Switching device according to claim 2,
characterized in that the interlocking device (10) contains a one-part control part which integrates the functions of the position inquiry plate (11) and the cam disc (21).

## Revendications

1. Appareil (1) de coupure, comportant un dispositif pour déplacer de manière commandée à une position (BS) de service, à une position (TE) de test et à une position (TR) de coupure un disjoncteur (2) à tiroir, qui peut être déplacé dans une installation (1) de coupure par rapport à un cadre (8) de tiroir au moyen d'un arbre (31) d'actionnement, qui est monté tournant dans le cadre (8) de tiroir et qui peut être actionné par une manivelle (4) d'actionnement pouvant emmanchée, un organe (32) de fermeture, pouvant être commandé, dégageant ou bloquant l'accès de la manivelle (4) d'actionnement à l'arbre (31) d'actionnement et le disjoncteur (2) à tiroir pouvant être retiré du cadre à tiroir après l'ouverture d'une porte (5),
caractérisé en ce que
l'organe de fermeture peut, par un dispositif (10) de verrouillage monté dans le cadre (8) de tiroir et coopérant avec le disjoncteur (2) à tiroir, ainsi que par un cylindre (6) de fermeture se trouvant dans la porte (5) de l'installation (1) de coupure, être commandé de telle manière qu'un déplacement du disjoncteur (2) à tiroir en une position préférée, notamment en la position de coupure est empêché, mais que le retrait hors du cadre (8) de tiroir est rendu possible.

2. Appareil de coupure suivant la revendication 1, caractérisé en ce que le dispositif de verrouillage comporte une tôle (11) d'interrogation de position, qui est montée tournante sur une plaque (7) de support et qui est reliée, par l'intermédiaire d'une tige (14) de couplage, à un disque (21) à came monté tournant également sur la plaque (7) de support, et en ce que la tôle (11) d'interrogation de position est en liaison avec un câble (3) de traction transmettant la position de rotation du cylindre (6) de fermeture de telle manière que l'organe (32) de fermeture peut être encore bloqué, exclusivement en la position préférée du disjoncteur (2) à tiroir, en liaison avec une position du cylindre (6) de fermeture qui dégage la clé et qui ne peut être atteinte qu'en cette position préférée, en coopération avec une tôle (23) de verrouillage immobilisée en position au moyen d'un ressort (24) de blocage.

3. Appareil de coupure suivant la revendication 2, caractérisé en ce que la tôle (7) de support est montée comme partie intégrante du cadre (8) de tiroir au-dessous du disjoncteur (2) à tiroir .

4. Appareil de coupure suivant la revendication 2, caractérisé en ce que le dispositif (10) de verrouillage comporte une pièce de commande d'une seule pièce intégrant du point de vue fonctionnel la tôle (11) d'interrogation de position et le disque (21) à came.
